Europäisches Patentamt

European Patent Office

Office européen des brevets

(11) Numéro de publication: **0 350 379**
**A1**

## (12) DEMANDE DE BREVET EUROPEEN

(21) Numéro de dépôt: 89401892.8

(22) Date de dépôt: 30.06.89

(51) Int. Cl.⁵: **C 11 B 3/00**
A 23 C 15/14, A 23 L 1/015

(30) Priorité: 05.07.88 FR 8809093

(43) Date de publication de la demande:
**10.01.90 Bulletin 90/02**

(84) Etats contractants désignés: **ES GR**

(71) Demandeur: **INSTITUT NATIONAL DE LA SANTE ET DE LA RECHERCHE MEDICALE (INSERM) (E.P.S.T.)**
**101, rue de Tolbiac**
**F-75013 Paris (FR)**

**GROUPEMENT D'INTERET ECONOMIQUE MONSERBIO dit "GIE MONSERBIO"**
**25, Faubourg des Balmettes**
**F-74000 Annecy (FR)**

(72) Inventeur: **Montet, Jean-Claude**
**2, rue Fontaine Ste Anne**
**F-13012 Marseille (FR)**

**Lindheimer, Marc, Henri**
**649, avenue de l'Europe**
**F-34170 Castelnau le Lez (FR)**

**Brun, Bernard**
**8, rue de Louvain**
**F-34000 Montpellier (FR)**

**Frankinet, Jacques**
**20, Allée des Fauvettes**
**F-56000 Vannes (FR)**

**Molard, Francis**
**12 "Les Bosquets"**
**F-34670 Baillargues (FR)**

(74) Mandataire: **Bugnon-Hays, Claudine**
**PATCO S.A. 10, rue Vivienne**
**F-75002 Paris (FR)**

(54) Procédé d'extraction du cholestérol contenu dans une matière grasse d'origine animale.

(57) La présente invention concerne un procédé d'extraction du cholestérol d'une matière grasse animale consistant à :
- ajouter à la matière grasse anhydre une solution aqueuse saline contenant un sel biliaire et un ou plusieurs esters de glycérol,
- former une émulsion fine,
- décanter le mélange,
- séparer la phase aqueuse contenant le cholestérol extrait,
- éventuellement répéter les différentes opérations.
La présente invention concerne également la matière grasse anhydre obtenue par ledit procédé.
Applications : fabrication de matières grasses anhydres appauvries en cholestérol.

EP 0 350 379 A1

**Description**

La présente invention concerne un nouveau procédé d'extraction du cholestérol contenu dans une matière grasse d'origine animale.

L'invention concerne également la matière grasse appauvrie en cholestérol ainsi obtenue.

L'invention trouve principalement son application dans la fabrication de matières grasses alimentaires à teneur réduite en stérols.

On sait que chez les personnes ayant une alimentation riche en cholestérol, on constate une altération de la paroi des artères : l'athérosclérose due en partie à un dépôt anormal de cholestérol dans la paroi (J. Am. Med. Assoc., 1985, 253, 2080-2086).

On sait également que le cholestérol est essentiellement apporté dans l'alimentation humaine par les matières grasses d'origine animale. Ainsi le beurre contient, pour 100 g, entre 200 et 340 mg de cholestérol dont 90 % est du cholestérol libre et 10 % du cholestérol estérifié.

La gravité que peut revêtir l'athérosclérose a précisément conduit à rechercher des techniques permettant la préparation de matières grasses alimentaires et notamment de compositions à base de matière grasse laitière dont la teneur en cholestérol est réduite.

Plusieurs procédés physico-chimiques ont été proposés pour réduire la teneur en cholestérol des matières grasses.

Le passage de la matière grasse liquide sur une colonne absorbante de charbon actif est décrit dans le brevet européen publié sous le numéro 174 848. La distillation moléculaire de la matière grasse laitière anhydre est utilisée pour préparer un substitut du beurre dans le brevet français 2 413 038. On a également décrit l'extraction du cholestérol par l'oxyde de carbone supercritique (Agric. Biol. Chem., 1982, 50 (5), 1209-1215).

Ces différents procédés ne sont pas adaptés à une utilisation industrielle car ils nécessitent la mise en oeuvre de manipulations complexes et onéreuses.

On a maintenant trouvé un nouveau procédé qui permet une extraction liquide-liquide du cholestérol non estérifié. Ce procédé est applicable à l'élimination du cholestérol à partir de matières grasses animales utilisées en alimentation humaine et plus particulièrement à l'extraction du cholestérol à partir de matières grasses laitières et notamment du beurre déshydraté ou non.

Le beurre est une émulsion constituée d'une phase huileuse et d'une phase aqueuse. La première est constituée essentiellement de triacylglycérol, de diglycérides et de phospholipides. Elle contient la quasi totalité du cholestérol. Cette phase huileuse constitue la matière grasse laitière anhydre ci-dessous dénommée MGLA. La phase aqueuse est constituée de caséine, lactoglobuline lactose et sels minéraux.

Le procédé selon l'invention est réalisé sur la phase huileuse : la MGLA à laquelle on ajoute une solution aqueuse saline additionnée d'un sel biliaire et d'un ou plusieurs mono- ou di- esters de glycérol.

Le procédé selon l'invention consiste à appauvrir la phase huileuse en cholestérol par action de la solution aqueuse détergente, à laisser décanter cette phase aqueuse puis à l'éliminer.

Ainsi la présente invention se réfère à un procédé d'extraction du cholestérol d'une matière grasse animale caractérisé en ce que :

a) on ajoute à la matière grasse laitière anhydre une solution aqueuse saline contenant un sel biliaire et un ou plusieurs mono- ou di- esters du glycérol ;

b) on forme une émulsion fine ;

c) on décante le mélange ;

d) on sépare la phase aqueuse contenant le cholestérol extrait pour obtenir la matière grasse laitière anhydre appauvrie en cholestérol.

On peut éventuellement répéter l'ensemble des opérations pour diminuer encore la teneur en cholestérol de la matière grasse.

Le volume de la solution aqueuse ajoutée est égal au volume de la matière grasse traitée ou supérieur jusqu'à représenter 60 fois le volume de la matière grasse traitée : au moins 1 volume d'eau pour 1 volume MGLA.

Comme sel biliaire, on utilise préférentiellement un cholate, par exemple le cholate de sodium.

Les esters du glycérol mis en oeuvre sont des monoesters ou des diesters d'acides gras insaturés.

Comme monoester du glycérol, on peut utiliser le monooléate de glycérol ou monooléine. On peut également utiliser un mélange de mono- ou diesters d'un ou plusieurs acides gras insaturés. Par exemple, on peut utiliser le DIMODAN LS (marque déposée), le PECEOL (marque déposée) ou le GELEOL (marque déposée).

Le DIMODAN LS est commercialisé par Grinsted ; c'est un distillat d'huile de tournesol alcoolisé par le glycérol ; il est constitué à 90 % de monoglycérides d'acides linoléique et oléïque dans la proportion d'environ 3 acides linoléïques pour 1 acide oléïque.

Le PECEOL est commercialisé par Gattefossé ; c'est un mélange de monooléate et de diolétate de glycérol contenant environ 40 % de monoester et 60 % de diester.

Le GELEOL est commercialisé par Gattefossé ; c'est un mélange d'esters palmitique et stéarique de glycérol contenant environ 40 % de monoester et 60 % de diester.

La concentration molaire en sel biliaire dans la solution aqueuse peut varier de 0,01 M à 1 M.

La concentration molaire en mono- ou di- ester de glycérol dans la solution aqueuse peut varier de 0,01 M à 1 M.

Le rapport de la concentration molaire en sel biliaire à la concentration molaire en mono- ou di- ester de glycétol peut varier de 0,5 à 10.

La concentration en chlorure de sodium peut varier de 0,05 M à 0,2 M.

Préférentiellement, la concentration molaire en sel biliaire est comprise entre 0,3 M et 0,6 M, la concentration molaire en mono- ou di- ester de glycérol est comprise entre 0,3 M et 0,6 M et le rapport est compris entre 0,5 et 2.

Pour réaliser l'émulsion de la matière grasse et de la phase aqueuse, on peut agiter fortement ou utiliser une sonde à ultrasons.

L'agitation est maintenue pendant un temps compris entre 30 minutes et 4 heures, préférentiellement pendant 2 heures.

On peut accélérer la décantation spontanée par centrifugation du mélange ou adjonction d'une quantité suffisante de solution saline concentrée.

L'ensemble du procédé est effectué à une température comprise entre 20°C et 45°C, de préférence à une température comprise entre 25°C et 37°C.

Différentes études analytiques ont permis de montrer que seul le cholestérol est extrait de la MGLA par le procédé selon l'invention.

L'analyse du taux de cholestérol dans les 2 phases a été faite par utilisation du cholestérol radioactif ou par application d'une méthode enzymatique mettant en jeu la cholestérol oxydase (Clin. Chim. Acta, 1975, 64, 337-341).

Les exemples suivants illustrent l'invention sans toutefois la limiter.

EXEMPLE 1

On prépare une solution contenant 5 g de solution saline 0,15 M, 2,5 g (5,8 mmoles) de cholate de sodium et 2,5 g (6,3 mmoles) de DIMODAN LS (marque déposée). A 30°C, on ajoute cette solution aqueuse (pH = 8) à 5 g de MGLA. On laisse l'émulsion formée sous agitation pendant 2 heures. Le moyen d'agitation utilisé est une sonde à ultrasons. On ajoute du chlorure de sodium solide jusqu'à atteindre la concentration de 2 M, et la phase aqueuse décante. Après séparation de la phase aqueuse, on obtient la MGLA appauvrie en cholestérol.

Pour mesurer le rendement de l'extraction selon le procédé décrit, on peut reprendre cet exemple en additionnant à la MGLA de départ 5 microcuries de cholestérol marqué au Carbone 14. Par comptage en scintillation liquide, on mesure le cholestérol présent dans la MGLA avant l'extraction et le cholestérol présent dans la phase aqueuse après l'extraction. Le rendement d'extraction du cholestérol est de 70 %.

L'opération d'extraction décrite peut être répétée 1 ou 2 fois. On obtient ainsi une MGLA de laquelle 97 % du cholestérol a été extrait.

EXEMPLE 2

Selon un autre mode de réalisation, on a utilisé comme ester de glycérol le PECEOL (marque déposée) commercialisé par Gattefossé. En opérant sur 1 g de MGLA mélangé à 60 g de solution saline contenant 0,43 g de PECEOL et 0,52 g de cholate de sodium, le rendement d'extraction du cholestétol est de 40 %.

EXEMPLE 3

Selon un autre mode de réalisation, on a utilisé comme ester de glycérol le monooléate de glycérol ou monooléine.

On prépare une solution contenant 5 g de solution saline 0,15 M, 0,52 g de cholate de sodium et 0,85 g de monooléine. A 22°C, on ajoute cette solution aqueuse à 1 g de MGLA. On laisse l'émulsion formée sous agitation par une sonde à ultrasons pendant 2 heures. On ajoute du chlorure de sodium solide jusqu'à atteindre la concentration 2 M et la phase aqueuse décante. Le rendement de l'extraction du cholestérol est de 50 %.

**Revendications**

1) Procédé d'extraction du cholestérol d'une matière grasse animale caractérisé en ce que :

    a) on ajoute à la matière grasse laitière anhydre une solution aqueuse saline contenant un sel biliaire et un ou plusieurs mono- ou di- esters du glycérol,

    b) on forme une émulsion fine,

    c) on décante le mélange,

    d) on sépare la phase aqueuse contenant le cholestérol extrait pour obtenir la matière grasse laitière anhydre appauvrie en cholestérol.

    e) et éventuellement, on répète les opérations a, b, c, d.

2) Procédé selon la revendication 1 caractérisé en ce que la solution saline est une solution de chlorure de sodium à une concentration de 0,15 M.

3) Procédé selon la revendication 1 caractérisé en ce que le sel biliaire ajouté dans la solution aqueuse est un sel de cholate dont la concentration molaire est comprise entre 0,01 M et 1 M.

4) Procédé selon la revendication 1 caractérisé en ce que l'ester de glycérol ajouté dans la solution aqueuse est un mono- ou di- ester d'un ou plusieurs acides gras insaturés du glycérol dont la concentration molaire est compris entre 0,01 M et 1 M.

5) Procédé selon les revendications 1 et 3 caractérisé en ce que l'ester de glycérol ajouté dans la phase aqueuse est choisi parmi les esters suivants : monooléine, DIMODAN LS (marque déposée), PECEOL (marque déposée) ou GELEOL (marque déposée).

6) Procédé selon la revendication 1 caractérisé en ce que le rapport entre la concentration molaire en sel biliaire et la concentration molaire mono- ou di- ester de glycérol est comprise entre 0,5 et 10.

7) Procédé selon les revendications 1 à 5 caractérisé en ce que :

    a) on ajoute à la matière grasse laitière anhydre une solution aqueuse de chlorure de sodium 0,15 M contenant un sel de cholate à une concentration molaire comprise entre 0,3 M et 0,6 M, un mono- ou di- ester de glycérol à une concentration molaire comprise entre 0,3 M et 0,6 M,

b) on forme une émulsion fine par agitation pendant un temps compris entre 30 minutes et 4 heures,

c) on décante le mélange,

d) on sépare la phase aqueuse contenant le cholestérol extrait pour obtenir la matière grasse laitière anhydre appauvrie en cholestérol.

8) Matière grasse laitière anhydre appauvrie en cholestérol caractérisée en ce qu'elle est obtenue par le procédé selon l'une quelconque des revendications 1 à 6.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | LIPIDS, vol. 22, no. 1, 1987, pages 28-32, Champaign, US; M.O. REYNIER et al.: "Intestinal cholesterol and oleic acid uptake from solutions supersaturated with lipids"<br>* Page 28, résumé; page 28, colonne de droite, paragraphe 4 - page 29, colonne de gauche, paragraphe 1; page 31, colonne de gauche, paragraphe 5 *<br>--- | 1 | C 11 B    3/00<br>A 23 C   15/14<br>A 23 L    1/015 |
| A | TETRAHEDRON, vol. 38, no. 9, 1982, pages 1159-1162, Pergamon Press Ltd, Oxford, GB; J.C. MONTET et al.: "Proprietes solubilisantes et structure des solutions aqueuses de sels biliaires dihydroxyles"<br>* Page 1159, résumé *<br>--- | 1 | |
| A | JOURNAL OF THE SCIENCE OF FOOD AND AGRICULTURE, vol. 29, no. 10, Octobre 1978, pages 909-914, Society of Chemical Industry, Oxford, GB; K. LARSSON et al.: "Phase behaviour of some aqueous systems involving monoglycerides, cholesterol and bile acids"<br>* Page 909, résumé; page 911, paragraphe 4 - page 913, paragraphe 1 *<br>--- | 1 | **DOMAINES TECHNIQUES RECHERCHES (Int. Cl.5)**<br><br>C 11 B<br>A 23 C<br>A 23 L |
| A | FR-A-2 314 721  (M. HENRY et al.)<br>* Revendication 1 *<br>--- | 1 | |
| A | WO-A-8 300 294  (ARTHUR D. LITTLE, INC.)<br>--- | 1 | |
| A | EP-A-0 256 911  (MONSERBIO)<br>* Revendications 1,4,10,11 *<br>---                              -/- | 1,8 | |

Le présent rapport a été établi pour toutes les revendications

| Lieu de la recherche | Date d'achèvement de la recherche | Examinateur |
|---|---|---|
| LA HAYE | 09-10-1989 | DEKEIREL M.J. |

Office européen
des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-8 700 010  (CHAPMAN) <br> * Revendications 1,7,9 * <br> ----- | 1 | |

DOMAINES TECHNIQUES RECHERCHES (Int. Cl.5)

Le présent rapport a été établi pour toutes les revendications

| Lieu de la recherche | Date d'achèvement de la recherche | Examinateur |
|---|---|---|
| LA HAYE | 09-10-1989 | DEKEIREL M.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)